(19) Europäisches Patentamt
European Patent Office
Office européen des brevets

(11) **EP 4 607 454 A1**

(12) **EUROPEAN PATENT APPLICATION**
published in accordance with Art. 153(4) EPC

(43) Date of publication:
**27.08.2025 Bulletin 2025/35**

(21) Application number: **23911727.8**

(22) Date of filing: **13.12.2023**

(51) International Patent Classification (IPC):
*G06T 7/00* (2017.01)

(52) Cooperative Patent Classification (CPC):
**G06T 7/0004; G01N 15/1433;** G01N 2015/1493;
G01N 2015/1497; G06T 2207/10061;
G06T 2207/20041; G06T 2207/20081;
G06T 2207/20084

(86) International application number:
**PCT/JP2023/044723**

(87) International publication number:
**WO 2024/142946 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.12.2022 JP 2022210212**

(71) Applicant: **Resonac Corporation
Tokyo 105-7325 (JP)**

(72) Inventors:
• **OKANO, Yu**
**Tokyo 105-7325 (JP)**
• **MATSUZAWA, Mitsuharu**
**Tokyo 105-7325 (JP)**
• **TOMISAKA, Katsuhiko**
**Tokyo 105-7325 (JP)**
• **SEKI, Hideyuki**
**Tokyo 105-7325 (JP)**

(74) Representative: **Strehl & Partner mbB
Maximilianstrasse 54
80538 München (DE)**

(54) **EVALUATION SYSTEM, EVALUATION METHOD, AND EVALUATION PROGRAM**

(57) An evaluation system includes at least one processor. The at least one processor is configured to: acquire a target image showing an object having a base material and a coating region on the base material; input the target image to a trained model estimating the coating region from an input image to identify the coating region of the object; and calculate an evaluation value related to the identified coating region.

**Fig.1**

EP 4 607 454 A1

## Description

## Technical Field

An aspect of the present disclosure relates to an evaluation system, an evaluation method, and an evaluation program.

## Background Art

Patent Literature 1 describes a conductive particle shape evaluation device that evaluates a shape of a surface of a conductive particle having a plurality of conductive protruding portions on the surface thereof.

## Citation List

## Patent Literature

Patent Literature 1: Japanese Unexamined Patent Publication No. 2016-061722

## Summary of Invention

## Technical Problem

There is a demand for a mechanism for easily performing evaluation on covering of an object.

## Solution to Problem

An evaluation system according to an aspect of the present disclosure comprises at least one processor. The at least one processor is configured to: acquire a target image showing an object having a base material and a coating region on the base material; input the target image to a trained model estimating the coating region from an input image to identify the coating region of the object; and calculate an evaluation value related to the identified coating region.

An evaluation method according to an aspect of the present disclosure is executed by an evaluation system including at least one processor. The evaluation method includes: acquiring a target image showing an object having a base material and a coating region on the base material; inputting the target image to a trained model estimating the coating region from an input image to identify the coating region of the object; and calculating an evaluation value related to the identified coating region.

An evaluation program according to an aspect of the present disclosure causes a computer to execute: acquiring a target image showing an object having a base material and a coating region on the base material; inputting the target image to a trained model estimating the coating region from an input image to identify the coating region of the object; and calculating an evaluation value related to the identified coating region.

In such aspects, the trained model estimates the coating region of the object from the target image. This configuration makes it possible to easily identify the coating region and makes it easy to calculate the evaluation value related to the coating region. Therefore, it is possible to easily perform evaluation on the covering of the object.

## Advantageous Effects of Invention

According to an aspect of the present disclosure, it is possible to easily perform evaluation on the covering of the object.

## Brief Description of Drawings

FIG. 1 is a diagram showing a functional configuration of an evaluation system.
FIG. 2 is a flowchart showing an example of generation of an object image.
FIG. 3 is a diagram showing an example of image processing related to FIG. 2.
FIG. 4 is a diagram showing an example of the image processing related to FIG. 2.
FIG. 5 is a flowchart showing an example of generation of a training image.
FIG. 6 is a diagram showing an example of image processing related to FIG. 5.

FIG. 7 is a flowchart showing an example of generation of a trained model.
FIG. 8 is a flowchart showing an example of evaluation on covering of an object.
FIG. 9 is a diagram showing an example of image processing related to FIG. 8.

**Description of Embodiments**

Hereinafter, embodiments of the present disclosure will be described in detail with reference to the accompanying drawings. In the description of the drawings, the same or equivalent elements are denoted by the same reference numerals, and a redundant description thereof will be omitted.

[Outline of System]

An evaluation system according to the present disclosure is a computer system that performs evaluation on covering of an object appearing in an image. The object has a base material and a coating region. The covering refers to a state in which at least a portion of the base material is hidden by the coating region in the appearance of the object. The evaluation system performs evaluation on the coating region, for example, evaluation on the covering of the base material by the coating region. The evaluation on the coating region refers to a process of quantitatively determining the coating region covering the base material. In one example, the evaluation system calculates an evaluation value, which is a quantitative index related to the coating region, and outputs the evaluation value. For example, the evaluation value is a value related to the covering of the base material by the coating region.

The object refers to a solid evaluated by the evaluation system. The base material refers to a component that occupies a main region of the object. The coating region refers to a component located on the base material. The object has any shape, dimensions, and components. For example, the object may have a spherical, planar, or columnar shape or may have a more complex shape. The object may have a size that can be visually recognized or may be so small that it can only be seen with a microscope. The shape and dimensions of the base material may influence the shape and dimensions of the object. The coating region covers at least a portion of a surface of the base material. The coating region may be formed by adhering powdery or granular particles on the base material or may be formed by applying a liquid coating agent or a coating agent containing metal onto the base material. A plurality of coating regions separated from each other may be provided on one base material. The coating region may be formed by a plurality of coating elements disposed on the base material. Individual particles are given as examples of the coating element. The particle disposed on the base material as the coating element may be understood as a protrusion. The coating region may be understood as a convex portion that protrudes from the surface of the base material or as a set of closely spaced protrusions. At least some of the components may be different between the base material and the coating region or all of the components may be common to the base material and the coating region. Both the base material and the coating region may be an organic compound or an inorganic compound or may include both the organic compound and the inorganic compound.

The object may be a particulate material. In one example, the particulate material comprises a core particle and a plurality of fine particles disposed on a surface of the core particle. A diameter of the fine particle is smaller than a diameter of the core particle. The core particle is an example of the base material, the individual fine particles are examples of the coating element, and a set of the plurality of fine particles is an example of the coating region.

The evaluation system identifies the coating region of the object using the trained model generated by machine learning. The trained model is a computational model that estimates the coating region of the object from the image showing the object. The machine learning refers to a method that iteratively performs learning based on given information to autonomously find out a law or a rule. The evaluation system inputs the image of the object to the trained model to identify the coating region and performs evaluation on the identified coating region. The evaluation system may generate the trained model using the machine learning. The generation of the trained model corresponds to a learning phase, and the identification of the coating region by the trained model corresponds to an operation phase. A learning model used in the evaluation system may be a model that performs instance segmentation or panoptic segmentation, for example, Mask R-CNN, DeepMask, Fully Convolutional Instance-aware Semantic Segmentation (FCIS), Panoptic Feature Pyramid Network, or UPSNet.

The introduction of the trained model makes it possible to automatically and accurately identify the coating region. It is necessary for a person to visually identify the coating region, depending on the nature of the object and the coating region. There is a technique according to the related art that converts an image of an object into a binary image for distinguishing a coating region from other regions and identifies the coating region based on the binary image. However, in this technique according to the related art, it is necessary for a person to visually set a binarization threshold value for each image, and the process takes time. In addition, the identification of the coating region is likely to depend on human senses. Further, it is difficult to accurately identify the coating region. As compared to the technique according to the related art, the evaluation system may automatically and accurately identify the coating region, and a user of the evaluation system may therefore simply obtain evaluation on the covering of the object.

[Configuration of System]

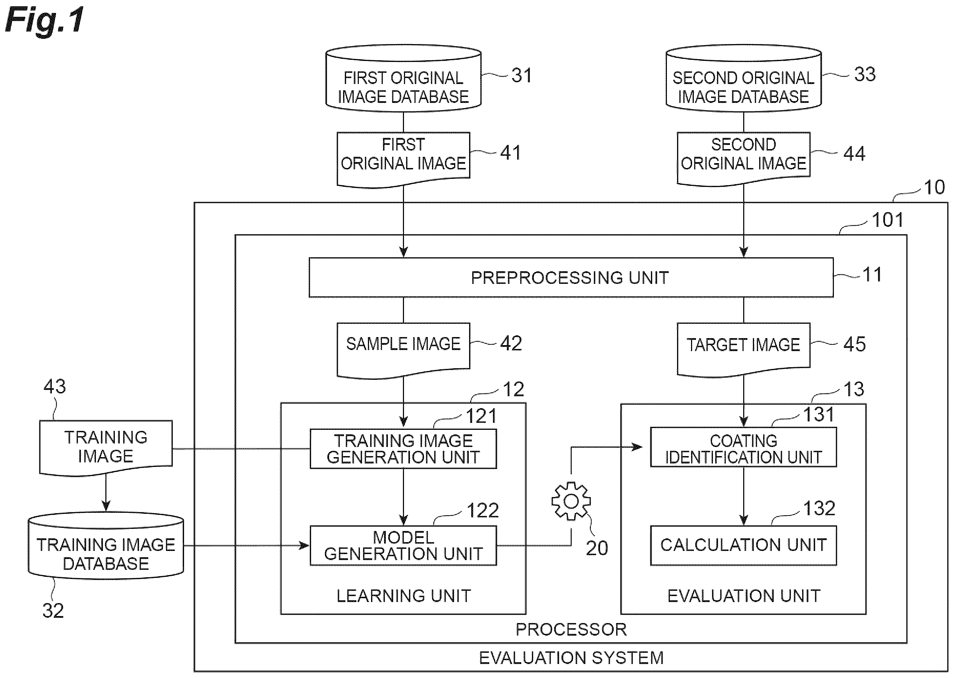

FIG. 1 is a diagram showing a functional configuration of an evaluation system 10 according to an example. The evaluation system 10 comprises a processor 101 as a hardware component. The processor 101 is, for example, a central processing unit (CPU), a digital signal processor (DSP), or a graphics processing unit (GPU). The evaluation system 10 further comprises, as hardware components, a main storage device configured by a RAM and a ROM, an auxiliary storage device configured by a flash memory, a hard disk, and the like, input devices such as a keyboard and a mouse, output devices such as a monitor and a speaker, and a communication module that executes data communication with an external device. The processor 101 executes a program stored in the auxiliary storage device to implement each functional module of the evaluation system 10.

An evaluation program for causing a computer to function as the evaluation system 10 includes program codes for implementing each functional module of the evaluation system 10. The evaluation program may be recorded on a non-transitory recording medium, such as a CD-ROM, a DVD-ROM, or a semiconductor memory, and then provided. Alternatively, the evaluation program may be provided as data signals superimposed on carrier waves via a communication network. The provided evaluation program is stored in, for example, the auxiliary storage device.

The evaluation system 10 may be configured by one computer or may be configured by a set of a plurality of computers, that is, a distributed system. Examples of the computer used for the evaluation system 10 include various types of computers such as a personal computer, a workstation, a tablet terminal, and a smartphone. In a case where a plurality of computers is used for the evaluation system 10, these computers are connected via the communication network, such as the Internet or an intranet, to logically construct one evaluation system 10. The evaluation system 10 may be implemented as a client-server system, such as a cloud system, or may be implemented by a standalone computer.

In one example, the evaluation system 10 is connected to at least one external storage via the communication network. The external storage is a device or a recording medium that stores various types of data used for processes in the evaluation system 10. The external storage may be a component of the evaluation system 10 or may be provided in a computer system separate from the evaluation system 10. The communication network may be constructed by the Internet, an intranet, or a combination thereof. The communication network may be constructed by a wired network, a wireless network, or a combination thereof.

FIG. 1 shows a first original image database 31, a training image database 32, and a second original image database 33 as examples of the external storage. Each of the first original image database 31 and the second original image database 33 is a storage that stores at least one original image showing at least one object. The training image database 32 is a storage that stores at least one training image used for the machine learning. At least two of the first original image database 31, the training image database 32, and the second original image database 33 may be integrated into one database.

In one example, the processor 101 functions as a preprocessing unit 11, a learning unit 12, and an evaluation unit 13. The preprocessing unit 11 is used in both the learning phase and the operation phase. The learning unit 12 corresponds to the learning phase, and the evaluation unit 13 corresponds to the operation phase.

The preprocessing unit 11 is a functional module that generates an object image showing a single object. In the learning phase, the preprocessing unit 11 generates a sample image 42, which is an example of the object image, from a first original image 41 read from the first original image database 31. The sample image 42 is used to generate a training image 43. In the operation phase, the preprocessing unit 11 generates a target image 45, which is another example of the object image, from a second original image 44 read from the second original image database 33. The target image 45 is used for evaluation on the covering of the object.

The learning unit 12 is a functional module that generates the trained model 20. In one example, the learning unit 12 comprises a training image generation unit 121 and a model generation unit 122. The training image generation unit 121 is a functional module that generates the training image 43 based on the sample image 42. The model generation unit 122 is a functional module that generates the trained model 20 using the machine learning based on the training image 43.

The evaluation unit 13 is a functional module that executes evaluation on the covering of the object. In one example, the evaluation unit 13 comprises a coating identification unit 131 and a calculation unit 132. The coating identification unit 131 is a functional module that identifies the coating region of the object from the target image 45 using the trained model 20. The calculation unit 132 is a functional module that calculates an evaluation value based on the identified coating region.

[Operation of System]

Hereinafter, an example of a process by the evaluation system 10 will be described, and an example of an evaluation method according to the present disclosure will be described. In the following examples, the object is a particulate material, and the coating elements are the individual fine particles on the core particle.

(Generation of Object Image)

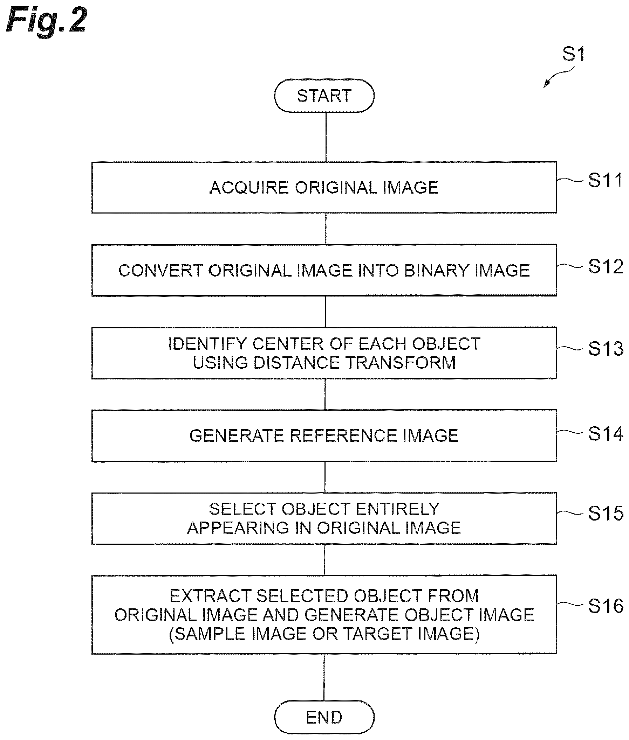

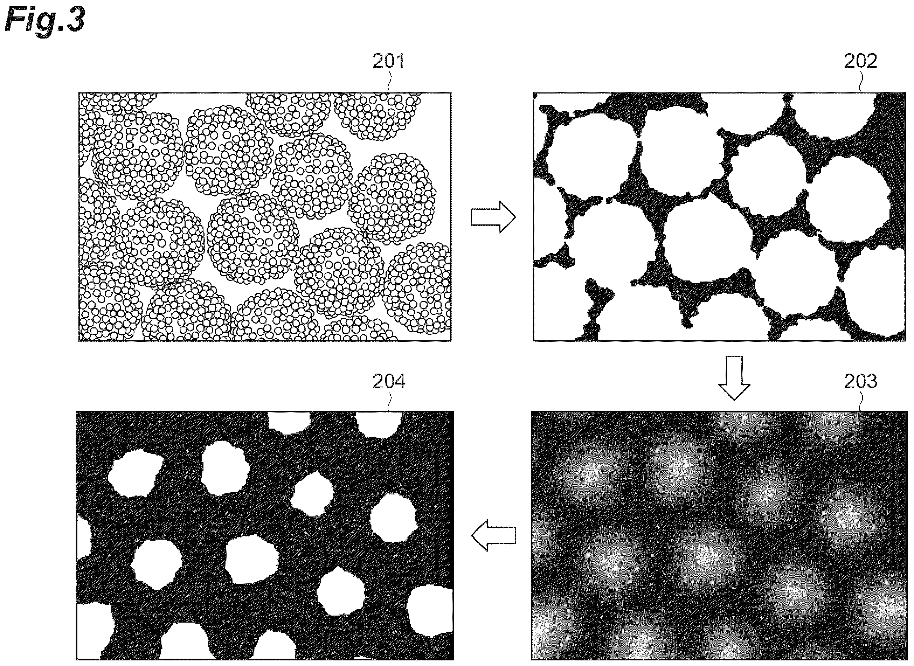

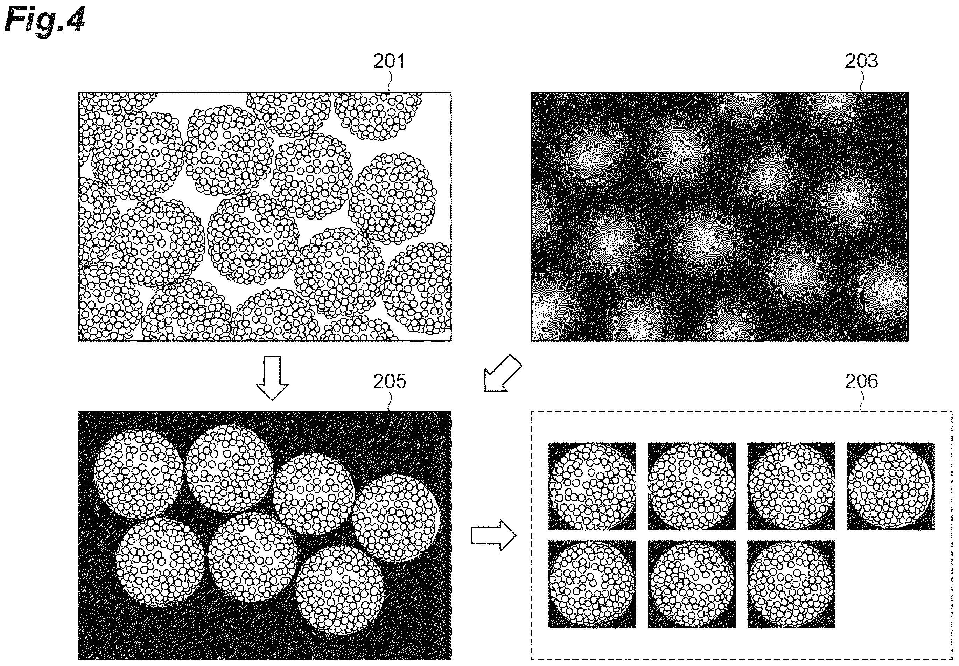

The generation of the object image will be described with reference to FIGS. 2 to 4. FIG. 2 is a flowchart showing an example of the generation process as a processing flow S1. FIGS. 3 and 4 are diagrams showing an example of image processing related to the processing flow S1. The evaluation system 10 may execute the processing flow S1 in both the learning phase and the operation phase.

In step S11, the preprocessing unit 11 acquires an original image. In one example, an original image showing a particulate material is a scanning electron microscope (SEM) image obtained by imaging a plurality of particulate materials collected on a carbon tape with an SEM. In a case where auxiliary information, such as a character string and a scale, is indicated in the original image, the preprocessing unit 11 may remove the auxiliary information using image processing, such as trimming, to generate an original image that does not include the auxiliary information. The preprocessing unit 11 reads the first original image 41 from the first original image database 31 in the learning phase and reads the second original image 44 from the second original image database 33 in the operation phase. In the following description of the processing flow S1, the first original image 41 and the second original image 44 are collectively referred to as "original images".

In step S12, the preprocessing unit 11 converts the original image into a binary image. In one example, the preprocessing unit 11 applies an averaging filter based on a predetermined kernel size to the original image to blur the original image. Then, the preprocessing unit 11 executes a binarization process, such as Otsu's binarization, on the blurred original image to convert the brightness of an object region, which is a region of the object, into 255 and to convert the brightness of a background region into 0. As a result, a binary image in which the object is represented in white and the background is represented in black is generated. In this binary image, in a case where a black dot is present as noise in a white region, the preprocessing unit 11 removes the black dot. Since the averaging filter is applied to the original image before the binarization process, it is possible to prevent or suppress a situation in which a large number of black dots are generated in the region of the object. FIG. 3 shows the conversion of an original image 201 into a binary image 202.

In step S13, the preprocessing unit 11 identifies the center of each object using distance transform. The distance transform of a binary image or a grayscale image is a process that calculates the distance of each pixel whose brightness is not 0 to the closest pixel whose brightness is 0 and generates a distance map indicating each distance. The distance map represents the individual distances in grayscale such that, as the distance becomes longer, the brightness becomes higher. The preprocessing unit 11 calculates the distance of each white pixel in the object region to the closest black pixel in the background region. The preprocessing unit 11 generates a distance map corresponding to the binary image based on the distance of each white pixel. The preprocessing unit 11 extracts a region having brightness equal to or greater than a predetermined threshold value as a central portion of each object, based on the distance map. The preprocessing unit 11 identifies a pixel having the largest pixel value in each central portion as the center of the object. FIG. 3 shows the conversion of the binary image 202 into a distance map 203. Each central portion having relatively high brightness in the distance map 203 corresponds to each object in the original image 201. In each central portion of the distance map 203, a pixel having the highest brightness indicates the center of the object.

In step S14, the preprocessing unit 11 generates a reference image indicating the central portion of each object. As described above, the central portion is obtained from the distance map. FIG. 3 shows that a reference image 204 in which a central portion is represented in white and the other region is represented in black is generated based on the distance map 203. In one example, the preprocessing unit 11 displays the reference image on the monitor. The user may check the generation of the object image through the reference image.

In step S15, the preprocessing unit 11 selects an object that entirely appears in the original image. In one example, the preprocessing unit 11 identifies the dimensions of the object based on the distance set for the pixel corresponding to the center of the object, with reference to the distance map. Then, the preprocessing unit 11 assumes the shape of the object based on the center and dimensions of the object. The preprocessing unit 11 selects an object whose entire shape is located in the original image, as the object entirely appearing in the original image. For example, the preprocessing unit 11 acquires the distance set for the pixel corresponding to the center of the object as the radius of the object. Then, the preprocessing unit 11 assumes a virtual circle defined by the center and the radius as the shape of the object. The preprocessing unit 11 selects an object whose entire virtual circle is located in the original image, as the object entirely appearing in the original image. An image 205 illustrated in FIG. 4 shows that seven particulate materials entirely appearing in the original image 201 have been selected based on the distance map 203.

In step S16, the preprocessing unit 11 extracts the selected object from the original image to generate an object image. The preprocessing unit 11 generates an object image of each of the selected n objects. As a result, n object images are obtained. An image group 206 illustrated in FIG. 4 is seven object images corresponding to seven objects selected from the original image 201. The object image is the sample image 42 in the learning phase and is the target image 45 in the operation phase. In the learning phase, the preprocessing unit 11 generates one or more sample images 42 from one first original image 41. The preprocessing unit 11 may store the sample image 42 in a predetermined storage device or may output the sample image 42 to the learning unit 12 in order to generate the training image 43. In the operation phase, the preprocessing unit 11 generates one or more target images 45 from one second original image 44. The preprocessing unit 11 may store the target image 45 in a predetermined storage device or may output the target image 45 to the evaluation unit 13 for evaluation on the covering of the object.

The evaluation system 10 may execute the processing flow S1 a plurality of times or repeatedly in each of the learning phase and the operation phase.

(Generation of Training Image)

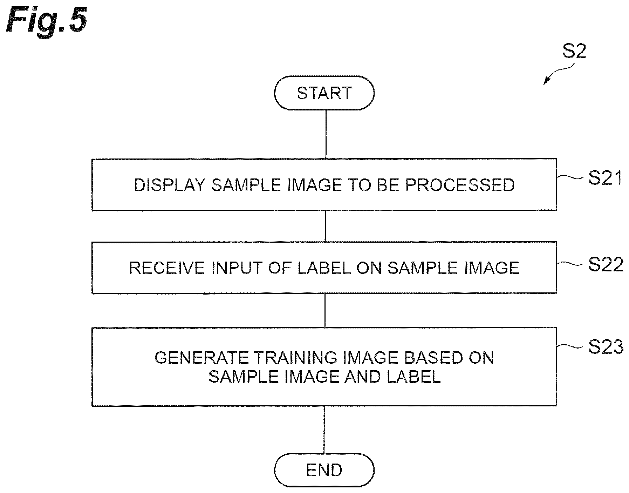

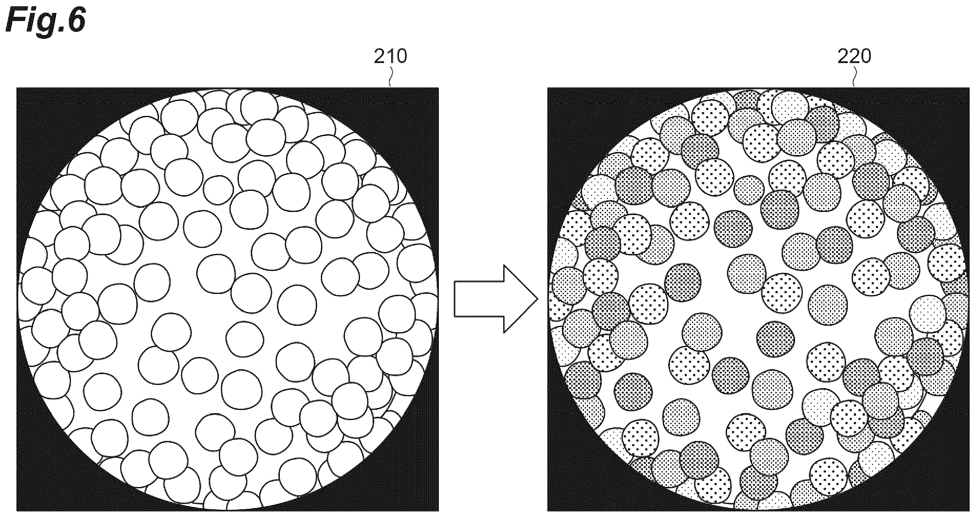

The generation of the training image will be described with reference to FIGS. 5 and 6. FIG. 5 is a flowchart showing an example of the process as a processing flow S2. FIG. 6 is a diagram showing an example of image processing related to the processing flow S2. The processing flow S2 corresponds to generation of training data used in the learning phase.

In step S21, the training image generation unit 121 displays the sample image 42 to be processed on the monitor. For example, the training image generation unit 121 may display the sample image 42 selected by the user or may display the sample image 42 input from the preprocessing unit 11.

In step S22, the training image generation unit 121 receives an input of a label on the sample image 42. The label refers to information treated as ground truth in machine learning. The label for the sample image 42 indicates the coating region, for example, the region of each coating element. In one example, the training image generation unit 121 receives the label set based on a user input.

In step S23, the training image generation unit 121 generates the training image 43 based on the sample image 42 and the label. For example, the training image generation unit 121 may embed the label in the sample image 42 to generate the training image 43. The training image generation unit 121 stores the generated training image 43 in the training image database 32. FIG. 6 shows generation of a training image 220 based on a sample image 210. The training image 220 includes a label indicating a region of each of the coating elements forming the coating region of the object. Each label may be displayed by various representation methods, such as a color, a pattern, and a mark, so as to distinguish each coating element. In the example illustrated as the training image 220, the fact that two or more coating elements have the same pattern does not mean that there is any relationship between the coating elements, but means that the coating elements are individually identified.

The evaluation system 10 may execute the processing flow S2 a plurality of times or repeatedly. The evaluation system 10 executes the processing flow S2 on each sample image 42 to accumulate the training image 43 in the training image database 32.

(Generation of Trained Model)

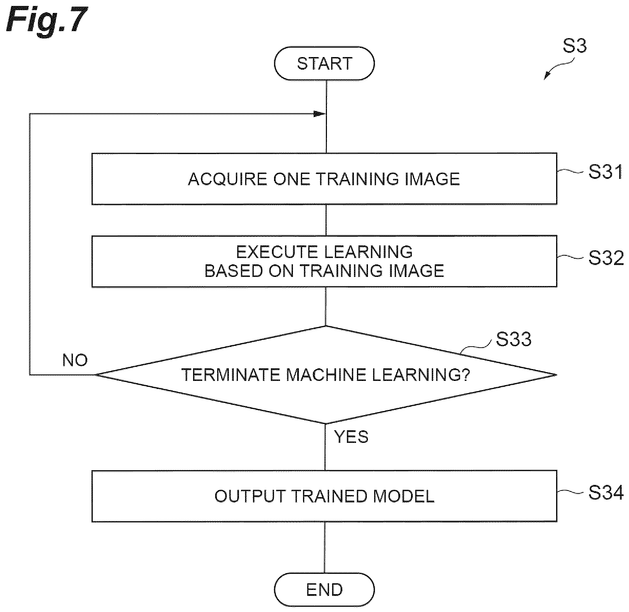

The generation of the trained model will be described with reference to FIG. 7. FIG. 7 is a flowchart showing an example of the process as a processing flow S3. The processing flow S3 corresponds to the learning phase.

In step S31, the model generation unit 122 acquires one training image 43 from the training image database 32.

In step S32, the model generation unit 122 executes the learning based on the training image 43. For example, the model generation unit 122 executes the learning using Mask R-CNN. In one example, the model generation unit 122 inputs the training image 43 to a machine learning model including a neural network and obtains an estimation result of the coating region output from the machine learning model. The model generation unit 122 updates parameters in the machine learning model using a method such as back propagation, based on an error between the estimation result and the label of the training image 43. For example, the model generation unit 122 updates a weight of the neural network.

In step S33, the model generation unit 122 determines whether or not to terminate the machine learning. In a case where the model generation unit 122 determines that a predetermined termination condition is not met (NO in step S33), the process returns to step S31. In a repetition process, the model generation unit 122 acquires a next training image 43 in step S31 and executes the learning based on that training image 43 in step S32. On the other hand, in a case where the model generation unit 122 determines that the termination condition is met (YES in step S33), the process proceeds to step S34. The termination condition may be set based on the error or may be set based on the number of training images 43 to be processed, that is, the number of learning operations. Alternatively, the model generation unit 122 may evaluate the performance of the machine learning model using given verification data and terminate the machine learning in a case where the evaluation meets a given criterion.

In step S34, the model generation unit 122 outputs the machine learning model for which the machine learning has been terminated as the trained model 20. For example, the model generation unit 122 stores the trained model 20 in a predetermined storage device. The trained model 20 is used by the evaluation unit 13.

(Evaluation on Covering of Object)

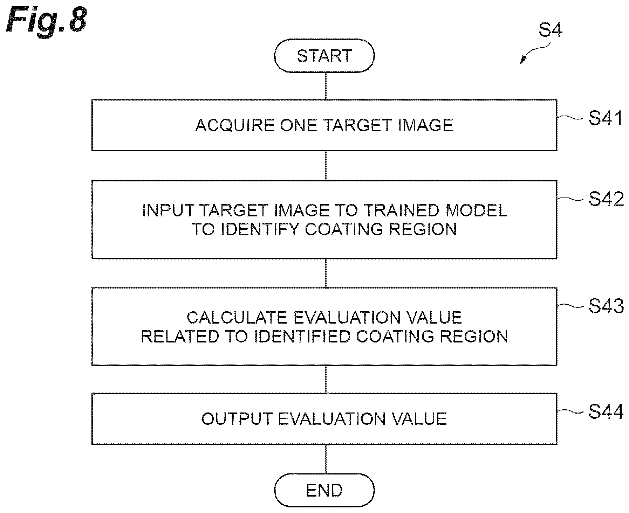

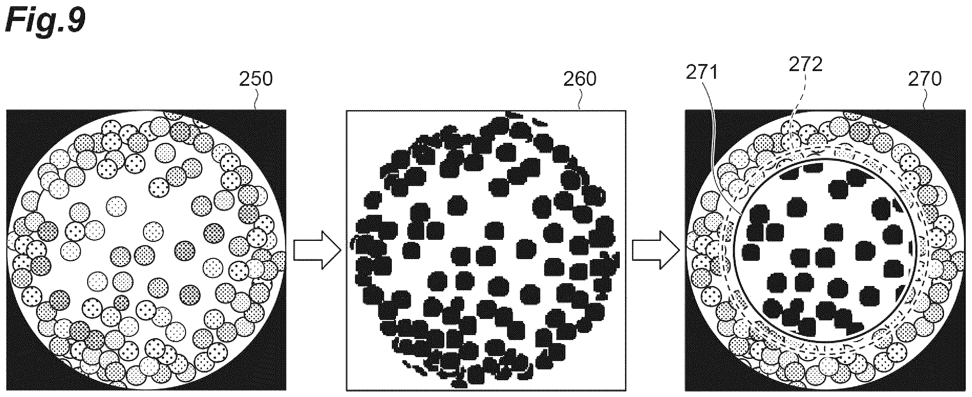

The evaluation on the covering of the object will be described with reference to FIGS. 8 and 9. FIG. 8 is a flowchart showing an example of the process as a processing flow S4. FIG. 9 is a diagram showing an example of image processing related to the processing flow S4. The processing flow S4 corresponds to the operation phase.

In step S41, the coating identification unit 131 acquires one target image. For example, the coating identification unit 131 may acquire the target image 45 selected by the user or may acquire the target image 45 input from the preprocessing unit 11.

In step S42, the coating identification unit 131 inputs the target image 45 to the trained model 20 to identify the coating region of the object shown by the target image 45. The coating identification unit 131 acquires the estimation result by the trained model 20 and identifies the coating region. For example, the coating identification unit 131 identifies a plurality of coating elements forming the coating region.

In step S43, the calculation unit 132 calculates an evaluation value related to the identified coating region. The calculation unit 132 may calculate an evaluation value related to the covering of the base material by the identified coating region. Examples of the evaluation value related to the coating includes a coverage indicating a ratio at which the base material is covered by the coating region. The calculation unit 132 may calculate physical parameters, such as an area, height, and a radius, as the evaluation values, for each of at least one coating element. The height of the coating element refers to a distance from the surface of the base material to the top of the coating element. The calculation unit 132 may calculate the height of the coating element located at the edge portion of the object based on the position of the surface of the base material and the position of the top of the coating element. The calculation unit 132 may calculate an evaluation value related to a shape, such as roundness, for each of at least one coating element. The calculation unit 132 may calculate, as the evaluation value, a statistical value related to a plurality of coating elements, such as a standard deviation, an average value, and a median value. For example, the calculation unit 132 may calculate statistical values for various physical parameters such as an area, roundness, height, and a radius. In a case where the coating element is a particle, the calculation unit 132 may calculate a CV value which is a coefficient of variation of a particle diameter as the evaluation value. The CV value is obtained by the following formula. The CV value is also an example of the statistical value.

$$\text{CV value} = \text{(standard deviation)}/\text{(median diameter)}$$

As an example related to the calculation of the evaluation value, calculation of the coverage and related image processing will be described with reference to FIG. 9. FIG. 9 shows a target image 250 and two auxiliary images 260 and 270. The target image 250 shows a particulate material as the object and represents each fine particle, which is the coating element, by color or pattern. The auxiliary image 260 represents only the coating region, that is, a plurality of fine particles. The auxiliary image 270 indicates a method for calculating the coverage. The auxiliary image 270 includes a virtual circle 271 indicating a central region of the object which will be described below and a virtual circle 272 indicating an outer edge of the base material. In the virtual circle 271, only a plurality of fine particles are shown as in the auxiliary image 260. Outside the virtual circle 271, the particulate material is shown in a form in which each fine particle is identified, as in the target image 250. The virtual circle 272 may be omitted.

In one example, the calculation unit 132 sets the central region of the object in order to calculate the coverage. The central region is a partial region of the object shown by the image. For example, the calculation unit 132 sets a region within a predetermined radius from the center of the object as the central region. The calculation unit 132 calculates an evaluation value in the central region. For example, the calculation unit 132 calculates the total area of the coating region located in the central region, that is, the total area of one or more coating elements located in the central region. Then, the calculation unit 132 calculates the proportion of the total area to the area of the central region as the coverage. Each area can be identified by the number of pixels. Therefore, the calculation unit 132 may calculate, as the coverage, the proportion of the total number of pixels of the coating regions located in the central region to the number of pixels of the central region. The calculation unit 132 may calculate the area as the evaluation value or may calculate the evaluation value related to the shape, for each of the coating elements located in the central region. The calculation unit 132 may calculate, as the evaluation value, a statistical value related to a plurality of coating elements located in the central region. In a case where the coating element is a particle, the calculation unit 132 may calculate the CV value in the central region as the evaluation value.

In step S44, the evaluation unit 13 outputs the evaluation value. The evaluation unit 13 may display the evaluation value on the monitor, may store the evaluation value in a predetermined storage device, such as a database, or may transmit the evaluation value to other computers.

The evaluation unit 13 may display at least one of the target image 250 and the auxiliary images 260 and 270. That is, the evaluation unit 13 may display an image showing at least the identified coating region. The user may check the basis of the identification of the coating region and the evaluation value through that image.

The evaluation system 10 may execute the processing flow S4 a plurality of times or repeatedly. For example, every time the user selects the target image 45, the evaluation system 10 executes the processing flow S4 in response to the selection. The evaluation unit 13 may calculate a statistical value of a plurality of evaluation values corresponding to a plurality of objects as a further evaluation value.

[Modification Examples]

The technology according to the present disclosure has been described in detail above based on various examples. However, the present disclosure is not limited to the above-described embodiment. The technology according to the present disclosure can be modified in various ways without departing from the gist of the present disclosure.

The evaluation system may not include any one of the learning unit and the evaluation unit. The trained model is portable between computer systems. Therefore, the learning unit may provide the trained model to another computer system, and the evaluation unit may use the trained model provided from another computer.

The original image may be provided from a device other than the database. For example, the original image may be provided directly from an imaging device such as an SEM or a camera.

The preprocessing unit may be used only in one of the learning phase and the operation phase. Alternatively, the evaluation system may not comprise the preprocessing unit. The learning unit may acquire the sample image from another computer system, and the evaluation unit may acquire the target image from another computer system. The training image may be generated by another computer system. Therefore, the evaluation system may not include the training image generation unit.

At least one of the sample image, the training image, and the target image may be an image showing a plurality of objects. Therefore, the learning unit may generate the trained model based on a sample image showing a plurality of objects or a training image showing a plurality of objects. This trained model is a computational model that has been trained to identify the coating region for at least one of one or more objects appearing in the target image. The evaluation unit may input the target image showing one or more objects to the trained model to identify the coating region for at least one of the one or more objects. In this example, the evaluation unit calculates an evaluation value related to the identified coating region for at least one object.

A processing procedure of a method executed by at least one processor is not limited to the example in the above-described embodiment. For example, some of the described-above steps may be omitted, or the described-above steps may be executed in other orders. In addition, any two or more of the above-described steps may be combined, or some of the steps may be corrected or deleted. Alternatively, other steps may be performed in addition to each of the above-described steps.

In the comparison between the magnitudes of two numerical values in the present disclosure, either of two criteria of "equal to or greater than" and "greater than" may be used, or either of two criteria of "equal to or less than" and "less than" may be used.

In the present disclosure, an expression "At least one processor executes a first process, executes a second process, ..., and executes an n-th process." or an expression corresponding thereto indicates a concept including a case where a subject (that is, a processor) that executes n processes from the first process to the n-th process is changed in the middle. That is, this expression indicates a concept including both a case where all of the n processes are executed by the same processor and a case where the processor is changed according to an any policy in the n processes.

[Appendix]

As will be appreciated from the various examples above, the present disclosure includes the following aspects.

(Appendix 1) An evaluation system comprising at least one processor,
wherein the at least one processor is configured to:

acquire a target image showing an object having a base material and a coating region on the base material;
input the target image to a trained model estimating the coating region from an input image to identify the coating region of the object; and
calculate an evaluation value related to the identified coating region.

(Appendix 2) The evaluation system according to Appendix 1, wherein the at least one processor is configured to calculate the evaluation value related to covering of the base material by the identified coating region. (Appendix 3) The evaluation system according to Appendix 2, wherein the at least one processor is configured to calculate, as the evaluation value, a coverage indicating a ratio at which the base material is covered by the identified coating region.

(Appendix 4) The evaluation system according to Appendix 1, wherein the at least one processor is configured to:

input the target image to the trained model to identify a plurality of coating elements forming the coating region; and

calculate a statistical value related to the plurality of coating elements as the evaluation value.

(Appendix 5) The evaluation system according to any one of Appendices 1 to 4, wherein the at least one processor is configured to:

set a central region of the object shown by the target image; and
calculate the evaluation value in the central region.

(Appendix 6) The evaluation system according to Appendix 5, wherein the at least one processor is configured to set a region within a predetermined radius from a center of the object as the central region.

(Appendix 7) The evaluation system according to any one of Appendices 1 to 6, wherein the at least one processor is configured to display an image showing at least the identified coating region.

(Appendix 8) The evaluation system according to any one of Appendices 1 to 7, wherein the at least one processor is configured to:

acquire an original image showing at least one object;
convert the original image into a binary image;
perform distance transform on the binary image to identify, for each of the at least one object, a center and dimensions of the object; and
generate the target image showing the object entirely appearing in the original image, based on the center and dimensions of each of the at least one object.

(Appendix 9) The evaluation system according to any one of Appendices 1 to 8, wherein the object is a particulate material.

(Appendix 10) The evaluation system according to Appendix 9,

wherein the base material is a core particle, and
wherein the coating region is a set of a plurality of fine particles.

(Appendix 11) An evaluation method executed by an evaluation system including at least one processor, the evaluation method comprising:

acquiring a target image showing an object having a base material and a coating region on the base material;
inputting the target image to a trained model estimating the coating region from an input image to identify the coating region of the object; and
calculating an evaluation value related to the identified coating region.

(Appendix 12) An evaluation program causing a computer to execute:

acquiring a target image showing an object having a base material and a coating region on the base material;
inputting the target image to a trained model estimating the coating region from an input image to identify the coating region of the object; and
calculating an evaluation value related to the identified coating region.

According to Appendices 1, 11, and 12, the trained model estimates the coating region of the object from the target image. This configuration makes it possible to easily identify the coating region and also makes it easy to calculate the evaluation value related to the coating region. Therefore, it is possible to easily perform evaluation on the covering of the object.

According to Appendix 2, it is possible to easily calculate the evaluation value related to the covering of the base material by the coating region.

According to Appendix 3, it is possible to easily calculate the coverage by the coating region.

According to Appendix 4, it is possible to easily identify a plurality of coating elements with the trained model, and it is also easy to calculate the statistical value related to the coating elements.

According to Appendix 5, the evaluation value in the central region of the object is calculated. The object appears in the target image as if the coating regions are gathered in a circumferential portion of the object, depending on a three-dimensional shape of the object. Therefore, it may be difficult to accurately calculate the evaluation value related to the coating region. In contrast, the central region of the object appears in the target image so as to represent the actual state. Therefore, the calculation of the evaluation value in the central region makes it possible to accurately perform evaluation on the covering of the object.

According to Appendix 6, since the circular central region is set, it is possible to appropriately set the central region regardless of the outer shape of the object.

According to Appendix 7, since the identified coating region is displayed, it is possible to present the processing result by the trained model to the user. The user may obtain a sense of satisfaction with the evaluation on the covering of the object with reference to the result.

According to Appendix 8, the center and dimensions of each object are identified by the conversion into the binary image and the distance transform, and the target image showing the object entirely appearing in the original image is obtained based on the identification. An appropriate target image for evaluation on the covering of the object may be automatically acquired by this method.

According to Appendix 9, it is possible to easily perform evaluation on the covering of the particulate material.

According to Appendix 10, it is possible to easily identify a set of a plurality of fine particles with the trained model, and it is also easy to calculate the evaluation value related to that set. Therefore, it is possible to easily perform evaluation on the covering of the particulate material including the fine particle as a component of the coating region.

**Reference Signs List**

10: Evaluation system; 11: Preprocessing unit; 12: Learning unit; 13: Evaluation unit; 20: Trained model; 31: First original image database; 32: Training image database; 33: Second original image database; 41: First original image; 42: Sample image; 43: Training image; 44: Second original image; 45: Target image; 121: Training image generation unit; 122: Model generation unit; 131: Coating identification unit; 132: Calculation unit.

**Claims**

1. An evaluation system comprising at least one processor, wherein the at least one processor is configured to:

   acquire a target image showing an object having a base material and a coating region on the base material;
   input the target image to a trained model estimating the coating region from an input image to identify the coating region of the object; and
   calculate an evaluation value related to the identified coating region.

2. The evaluation system according to claim 1, wherein the at least one processor is configured to calculate the evaluation value related to covering of the base material by the identified coating region.

3. The evaluation system according to claim 2, wherein the at least one processor is configured to calculate, as the evaluation value, a coverage indicating a ratio at which the base material is covered by the identified coating region.

4. The evaluation system according to claim 1, wherein the at least one processor is configured to:

   input the target image to the trained model to identify a plurality of coating elements forming the coating region; and
   calculate a statistical value related to the plurality of coating elements as the evaluation value.

5. The evaluation system according to any one of claims 1 to 4, wherein the at least one processor is configured to:

   set a central region of the object shown by the target image; and
   calculate the evaluation value in the central region.

6. The evaluation system according to claim 5, wherein the at least one processor is configured to set a region within a predetermined radius from a center of the object as the central region.

7. The evaluation system according to any one of claims 1 to 4, wherein the at least one processor is configured to display an image showing at least the identified coating region.

8. The evaluation system according to any one of claims 1 to 4, wherein the at least one processor is configured to:

   acquire an original image showing at least one object;
   convert the original image into a binary image;
   perform distance transform on the binary image to identify, for each of the at least one object, a center and dimensions of the object; and
   generate the target image showing the object entirely appearing in the original image, based on the center and dimensions of each of the at least one object.

9. The evaluation system according to any one of claims 1 to 4, wherein the object is a particulate material.

10. The evaluation system according to claim 9,

    wherein the base material is a core particle, and
    wherein the coating region is a set of a plurality of fine particles.

11. An evaluation method executed by an evaluation system including at least one processor, the evaluation method comprising:

    acquiring a target image showing an object having a base material and a coating region on the base material;
    inputting the target image to a trained model estimating the coating region from an input image to identify the coating region of the object; and
    calculating an evaluation value related to the identified coating region.

12. An evaluation program causing a computer to execute:

    acquiring a target image showing an object having a base material and a coating region on the base material;
    inputting the target image to a trained model estimating the coating region from an input image to identify the coating region of the object; and
    calculating an evaluation value related to the identified coating region.

# Fig.1

EP 4 607 454 A1

EP 4 607 454 A1

**Fig.2**

S1

```
        ┌──────────┐
        │  START   │
        └──────────┘
              │
┌─────────────────────────────────────┐
│      ACQUIRE ORIGINAL IMAGE         │── S11
└─────────────────────────────────────┘
              │
┌─────────────────────────────────────┐
│ CONVERT ORIGINAL IMAGE INTO BINARY   │── S12
│             IMAGE                    │
└─────────────────────────────────────┘
              │
┌─────────────────────────────────────┐
│    IDENTIFY CENTER OF EACH OBJECT    │── S13
│      USING DISTANCE TRANSFORM        │
└─────────────────────────────────────┘
              │
┌─────────────────────────────────────┐
│      GENERATE REFERENCE IMAGE        │── S14
└─────────────────────────────────────┘
              │
┌─────────────────────────────────────┐
│       SELECT OBJECT ENTIRELY         │── S15
│     APPEARING IN ORIGINAL IMAGE      │
└─────────────────────────────────────┘
              │
┌─────────────────────────────────────┐
│   EXTRACT SELECTED OBJECT FROM       │── S16
│ ORIGINAL IMAGE AND GENERATE OBJECT   │
│  IMAGE (SAMPLE IMAGE OR TARGET       │
│            IMAGE)                    │
└─────────────────────────────────────┘
              │
        ┌──────────┐
        │   END    │
        └──────────┘
```

13

Fig.3

# Fig.4

EP 4 607 454 A1

*Fig.5*

S2

START

DISPLAY SAMPLE IMAGE TO BE PROCESSED — S21

RECEIVE INPUT OF LABEL ON SAMPLE IMAGE — S22

GENERATE TRAINING IMAGE BASED ON
SAMPLE IMAGE AND LABEL — S23

END

Fig.6

# Fig.7

START

ACQUIRE ONE TRAINING IMAGE — S31

EXECUTE LEARNING
BASED ON TRAINING IMAGE — S32

TERMINATE MACHINE LEARNING? — S33

NO

YES

OUTPUT TRAINED MODEL — S34

END

S3

# Fig.8

S4

START

ACQUIRE ONE TARGET IMAGE — S41

INPUT TARGET IMAGE TO TRAINED MODEL TO IDENTIFY COATING REGION — S42

CALCULATE EVALUATION VALUE RELATED TO IDENTIFIED COATING REGION — S43

OUTPUT EVALUATION VALUE — S44

END

Fig.9

## INTERNATIONAL SEARCH REPORT

<table>
<tr><td colspan="2">International application No.</td></tr>
<tr><td colspan="2">**PCT/JP2023/044723**</td></tr>
</table>

**A.    CLASSIFICATION OF SUBJECT MATTER**

*G06T 7/00*(2017.01)i
FI:    G06T7/00 610; G06T7/00 350B

According to International Patent Classification (IPC) or to both national classification and IPC

**B.    FIELDS SEARCHED**

Minimum documentation searched (classification system followed by classification symbols)

G06T7/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | CN 113344901 A (BEIJING SENSETIME SCIENCE TECH. LTD.) 03 September 2021 (2021-09-03)<br>    paragraphs [0060]-[0097], [0106], [0109] | 1-4, 7, 9-12 |
| A |  | 5-6, 8 |
| A | JP 2022-50347 A (EVONIK OPERATIONS GMBH) 30 March 2022 (2022-03-30)<br>    claim 1 | 1-12 |
| A | JP 2022-50348 A (EVONIK OPERATIONS GMBH) 30 March 2022 (2022-03-30)<br>    claim 1 | 1-12 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **02 February 2024** | **13 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2023/044723**

| Patent document cited in search report | | | Publication date (day/month/year) | Patent family member(s) | | | Publication date (day/month/year) |
|---|---|---|---|---|---|---|---|
| CN | 113344901 | A | 03 September 2021 | (Family: none) | | | |
| JP | 2022-50347 | A | 30 March 2022 | US | 2022/0084181 | A1 | |
| | | | | claim 1 | | | |
| | | | | EP | 3971556 | A1 | |
| | | | | EP | 3971557 | A1 | |
| | | | | CN | 114283111 | A | |
| | | | | KR | 10-2022-0037392 | A | |
| JP | 2022-50348 | A | 30 March 2022 | US | 2022/0082508 | A1 | |
| | | | | claim 1 | | | |
| | | | | EP | 3971904 | A1 | |
| | | | | CN | 114283112 | A | |
| | | | | KR | 10-2022-0037395 | A | |

Form PCT/ISA/210 (patent family annex) (July 2022)

**REFERENCES CITED IN THE DESCRIPTION**

**Patent documents cited in the description**

- JP 2016061722 A